# FASCICULE DE BREVET EUROPEEN

(11) **EP 0 567 390 B1**
(45) Date de publication et mention de la délivrance du brevet: **26.07.1995**
(21) Numéro de dépôt: 93401020.8
(22) Date de dépôt: 20.04.1993
(51) Int. Cl.: H04N 3/15

(54) **Dispositif de traitement de signaux numériques provenant de capteurs optiques et transformateur vidéo équipé d'au moins un tel dispositif**
Verarbeitungsvorrichtung für digitalen Signale von optischen Sensoren und Videotransformator mit solcher Vorrichtung
Digital signal processing device from optical sensors and videotransformer equipped with such a device

(30) Priorité: 24.04.1992 FR 9205053
(43) Date de publication de la demande: 27.10.1993
(73) Titulaire: THOMSON-CSF, 75008 Paris (FR)
(72) Inventeur: Antoine, Jacques, F-92402 Courbevoie Cedex (FR); Clairgironnet, Jean-Marc, F-92402 Courbevoie Cedex (FR); Vejus, Patrick, F-92402 Courbevoie Cedex (FR)
(74) Mandataire: Courtellemont, Alain

(56) Documents cités:
- EP-A- 0 308 075
- US-A- 4 459 619
- US-A- 4 712 134

## Description

La présente invention concerne le traitement des signaux numériques provenant de capteurs optiques et en particulier de capteurs optiques linéaires aussi appelés lignes de photo-détecteurs.

L'invention concerne des dispositifs pour effectuer ce traitement et des transformateurs vidéo constitués par un de ces dispositifs ou par l'association de plusieurs de ces dispositifs.

Pour analyser une image, voir par exemple US-A-4 459 619, il est connu d'utiliser une ou plusieurs lignes de photo-détecteurs. La longueur d'une ligne de photo-détecteurs utilisée, dans une caméra, comme capteur d'image dépend des applications, de la résolution recherchée et du format de l'image. Cette ligne peut être constituée soit d'une barrette monolithique quand il en existe une qui correspond à l'analyse optique à effectuer, soit d'un assemblage de plusieurs barrettes ; c'est ainsi, par exemple, qu'il existe dans le commerce des barrettes monolithiques de 2048 et de 6000 photo-détecteurs et des barrettes faites de l'assemblage de trois barrettes monolithiques de 2048 photo-détecteurs chacune. Quand les barrettes du commerce ne correspondent pas aux besoins des montages à réaliser, elles sont optiquement aboutées avec un recouvrement des photo-détecteurs au niveau des extrémités aboutées ; pour les barrettes du commerce faites de plusieurs barrettes monolithiques, elles sont généralement montées tête-bêche sur un même support mécanique, mais sans recouvrement optique.

Différentes lignes de photo-détecteurs sont ainsi réalisées et il est connu de concevoir un transformateur vidéo spécifique à chaque réalisation de ligne, pour traiter les signaux fournis par la ligne considérée ; le traitement permet d'obtenir un signal vidéo représentatif de la position réelle des photo-détecteurs dans le plan focal de la caméra, dans un format programmable en ligne et à une fréquence qui peut être différente de la fréquence d'analyse.

Le but de la présente invention est de permettre de ne pas avoir à concevoir un nouveau transformateur vidéo pour chaque nouvelle ligne.

Ceci est obtenu grâce à un dispositif de traitement comportant des mémoires, des moyens d'adressage des mémoires et des moyens d'addition et dont la configuration peut être modifiée pour constituer, seul ou en association avec d'autres dispositifs identiques, un transformateur vidéo.

Selon l'invention, il est proposé un dispositif pour le traitement de signaux, comportant n entrées principales, avec n entier supérieur à 1, pour recevoir des signaux numériques à traiter provenant d'un capteur optique, une sortie principale pour délivrer un signal traité dans un format programmable en ligne, et n circuits de mémorisation ayant des entrées d'écriture et des sorties de lecture, caractérisé en ce qu'il comporte des moyens de commutation pour assurer le choix entre plusieurs configurations de liaisons entre les entrées principales et les entrées d'écriture, des premiers moyens d'adressage programmables pour assurer le choix entre différents adressages d'écriture des circuits de mémorisation, des seconds moyens d'adressage programmables pour assurer le choix entre différents adressages de lecture des circuits de mémorisation, au moins un circuit d'addition comportant plusieurs entrées et une sortie et des moyens de liaison pour rendre possible au moins une configuration de liaisons entre les sorties de lecture et les entrées du circuit d'addition d'une part et entre la sortie du circuit d'addition et la sortie principale d'autre part.

La présente invention sera mieux comprise et d'autres caractéristiques apparaîtront à l'aide de la description ci-après et des figures s'y rapportant qui représentent :
- les figures 1 et 2, des lignes de photo-détecteurs utilisées avec des dispositifs de traitement selon l'invention,
- la figure 3, des signaux vidéo relatifs à la ligne selon la figure 1,
- les figures 4 et 5, des schémas illustrant le fonctionnement respectivement en écriture et en lecture d'un dispositif de traitement selon l'invention,
- la figure 6, un transformateur vidéo selon l'invention.

Sur les différentes figures, les éléments correspondants sont désignés par le même repère.

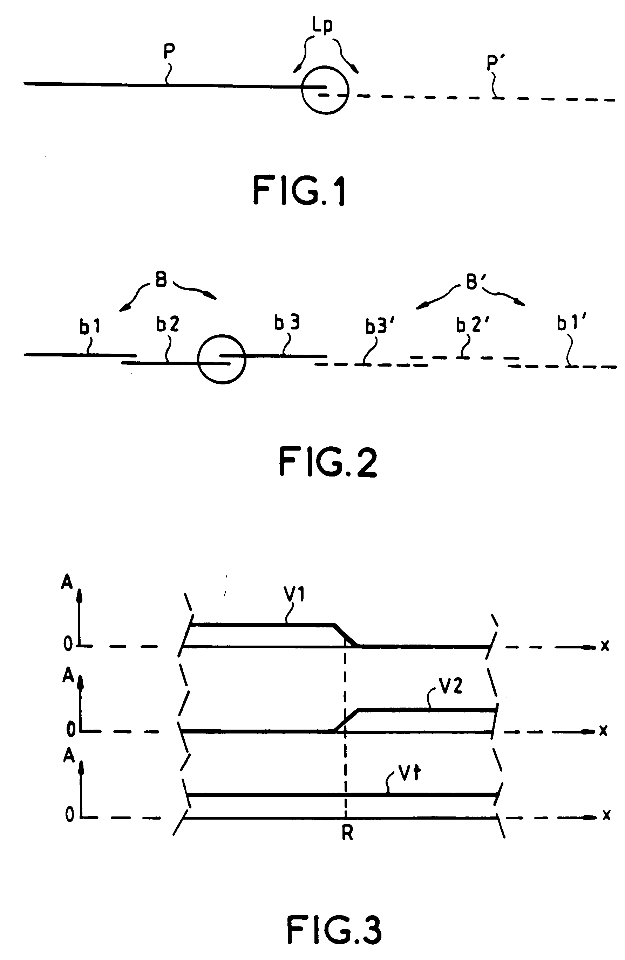

La figure 1 est le schéma d'une ligne de photo-détecteurs, Lp, réalisée par aboutement de deux barrettes monolithiques P et P′. Dans ce schéma les barrettes P et P′ bien qu'étant des barrettes du commerce, identiques, comportant chacune 6000 photo-détecteurs, ont été représentées respectivement en traits pleins et en traits interrompus pour mieux les distinguer. Ces deux barrettes présentent une zone de recouvrement qui se trouve sensiblement au milieu d'un cercle dessiné sur la figure 1 dans le seul but de mieux repérer cette zone.

La figure 2 est le schéma d'une autre ligne de photo-détecteurs, Lb, réalisée par aboutement de deux barrettes composées, B et B′, montées tête-bêche et faites chacune de trois barrettes monolithiques b1, b2, b3 et b1′, b2′, b3′. Là aussi les barrettes B et B′, bien qu'étant des barrettes du commerce, identiques, comportant chacune 3 x 2048 photo-détecteurs, ont été représentées respectivement en traits pleins et en traits interrompus de manière à mieux les distinguer. Sur la figure 2 apparaissent cinq zones de recouvrement dont deux à l'intérieur de la barrette B, deux à l'intérieur de la barrette B′ et une correspondant à l'aboutement des barrettes B et B′ ; un cercle a été dessiné sur la figure 2 autour de la zone de recouvrement des barrettes monolithiques b2 et b3 dans le seul but de mieux repérer cette zone.

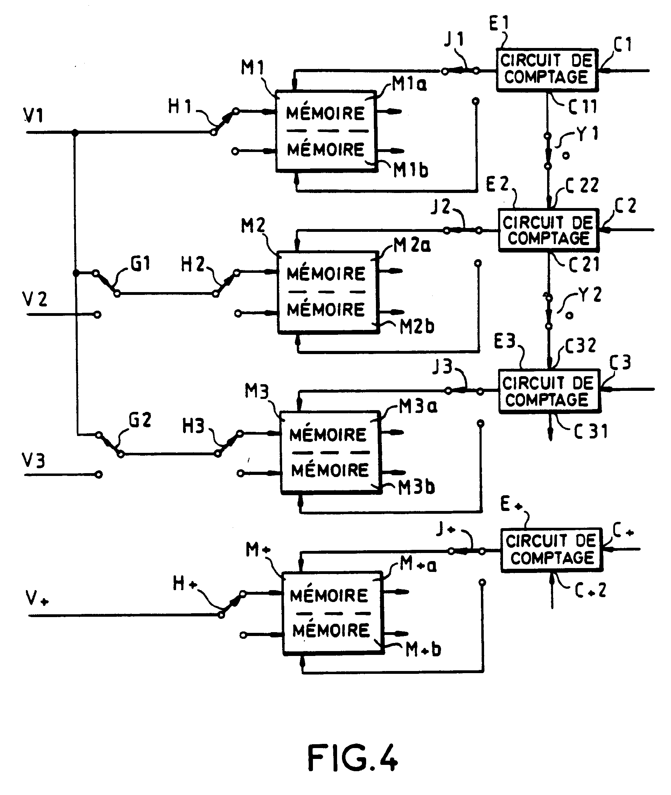

La figure 3 montre de façon schématique, à un instant donné et en fonction de l'abscisse x mesurée le long de la ligne de photo-détecteurs Lp selon la figure 1, comment évolue l'amplitude A des signaux vidéo V1 et V2 délivrés respectivement par ceux des photo-détecteurs des barrettes monolithiques P et P′ situés au voisinage et de part et d'autre du point R correspondant au milieu de la zone de recouvrement de ces deux barrettes P, P′. Le traitement à faire subir à ces deux signaux vidéo consiste, en particulier, à les arranger de manière qu'ils se suivent dans le temps en combinant en un seul signal les parties de ces signaux qui correspondent à la zone de recouvrement ; ce traitement donne un signal vidéo Vt représenté sur la figure 3. Différents problèmes sont à résoudre pour obtenir ce signal Vt ; en effet il faut tenir compte de ce que, dans les assemblages de barrettes monolithiques, les signaux vidéo issus des différentes barrettes ne sont pas corrélés étant donné que la lecture des barrettes se fait en parallèle, de ce qu'il peut arriver que des barrettes de longueurs différentes soient aboutées, de ce qu'il faut effectuer une combinaison pour les signaux vidéo provenant des zones de recouvrement et de ce que, lorsque deux barrettes sont aboutées tête-bêche, l'une se lit de la droite vers la gauche et l'autre de la gauche vers la droite. Jusqu'à présent tous les transformateurs vidéo pour effectuer le traitement des signaux fournis par une ligne composée de barrettes aboutées étaient conçus au cas par cas. Les figures 4, 5 et 6 montrent comment peut être constitué un transformateur vidéo plus souple d'emploi ; dans ces figures les circuits de synchronisation précise relevant de la technologie courante des transformateurs vidéo, n'ont pas été représentés en vue de rendre les dessins plus clairs et de simplifier l'exposé.

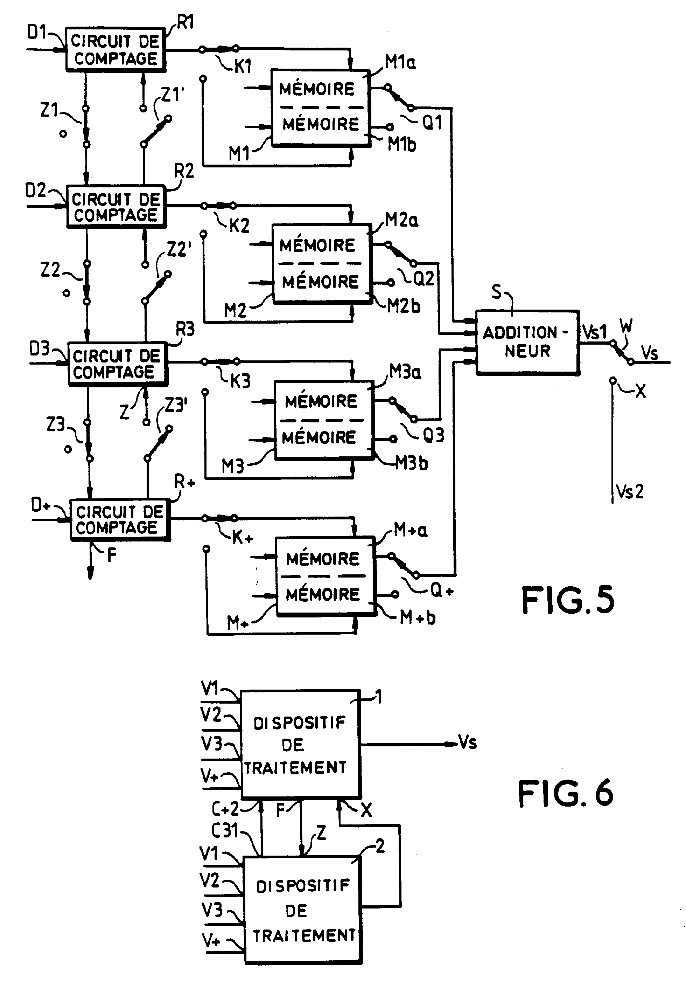

La figure 4 est le schéma simplifié de la partie écriture d'un dispositif de traitement selon l'invention. Ce dispositif comporte quatre entrées pour signaux vidéo : V1, V2, V3, V+. L'entrée V1 est reliée à la borne commune d'un commutateur à deux positions H1, à la première borne d'un commutateur G1 et à la première borne d'un commutateur G2 ; ces commutateurs comme d'ailleurs tous les autres commutateurs des figures 4 et 5 sont représentés sous la forme de commutateurs mécaniques de façon à faciliter la compréhension des schémas, mais dans le dispositif de traitement qui a servi d'exemple pour la présente description ces différents commutateurs sont tous des commutateurs électroniques. Les entrées V2 et V3 sont respectivement reliées aux secondes bornes des commutateurs G1 et G2. La borne commune du commutateur G1, la borne commune du commutateur G2 et l'entrée V+ sont respectivement reliées aux bornes communes de trois commutateurs à deux positions H2, H3, H+.

Le dispositif selon la figure 4 comporte également quatre circuits de mémorisation M1, M2, M3, M+ constitués chacun par deux mémoires à accès aléatoire (Random access memory ou RAM dans la littérature anglo-saxonne) M1a, M1b, M2a, M2b, M3a, M3b, M+a, M+b ; les deux mémoires d'un même circuit de mémorisation sont utilisées l'une en écriture et l'autre en lecture et cela de façon alternée dans le temps. Les commutateurs H1, H2, H3, H+ permettent de choisir celle des deux mémoires, dans les circuits de mémorisation M1, M2, M3, M+, qui est en écriture ; la figure 4 correspond à un moment où ce sont les mémoires M1a, M2a, M3a, M+a qui sont utilisées en écriture et donc les mémoires M1b, M2b, M3b, M+b en lecture. Cette utilisation en écriture est assurée par un adressage au moyen de circuits de comptage E1, E2, E3, E+ dont les sorties sont respectivement reliées aux bornes communes de commutateurs J1, J2, J3, J+ ; les premières bornes de ces commutateurs sont respectivement reliées aux entrées d'adressage lecture des mémoires M1a, M2a, M3a, M+a tandis que les secondes bornes sont respectivement reliées aux entrées d'adressage lecture des mémoires M1b, M2b, M3b, M+b. Chacun des circuits de comptage E1, E2, E3, E+ possède une entrée de comptage C1, C2, C3, C+ et peut être programmé pour fonctionner, au choix, en comptage ou en décomptage, et pour ne compter que jusqu'à une valeur maximale donnée. Quant aux circuits de comptage E2, E3 et E+, ils possèdent une entrée annexe de commande de comptage C22, C32, C+2 ; l'entrée C22 est reliée à une sortie annexe C11 du circuit de comptage E1, à travers un interrupteur Y1 et, quand l'interrupteur Y1 est fermé, le circuit de comptage E2 ne compte qu'à partir du passage du circuit de comptage E1 par une valeur donnée dite valeur de déclenchement ; de même l'entrée C32 du circuit de comptage E3 est reliée à une sortie annexe C21 du circuit de comptage E2, à travers un interrupteur Y2 et, quand l'interrupteur Y2 est fermé, le circuit de comptage E3 est déclenchée lors du passage du circuit de comptage E2 par une valeur de déclenchement donnée.

Le circuit de comptage E3 comporte lui aussi une sortie annexe C31 qui fournit un signal quand le circuit E3 passe par une valeur de déclenchement donnée.

Le montage selon la figure 4 permet, seul ou en association avec un ou plusieurs autres montages identiques, l'écriture en mémoire de signaux vidéo provenant de différents types de capteurs optiques linéaire, par une simple programmation des positions des différents commutateurs et de l'arrêt du comptage.

A titre d'exemples non limitatifs, l'utilisation du montage selon la figure 4 va être étudié pour l'écriture en mémoire des signaux vidéo provenant de lignes de photo-détecteurs comme celles représentées sur les figures 1 et 2, avec des recouvrements qui concernent à chaque fols 30 photo-détecteurs d'une extrémité de barrette monolithique ; dans ces exemples les barrettes P et P′ sont montées tête-bêche de même que les barrettes B et B′ et les barrettes b1, b2, b3 sont toutes montées dans le même sens, de même que les barrettes b1′, b2′, b3′. Ce sont ces mêmes conditions d'utilisation qui seront reprises pour montrer comment utiliser le montage selon la figure 5.

Dans le cas de l'utilisation d'une ligne selon la figure 1, mis à part les commutateurs H1, H2, H3, H+ et J1, J2, J3, J+ qui peuvent être soit en position haute soit en position basse, les commutateurs G1, G2 et les interrupteurs Y1, Y2 sont dans les positions indiquées sur la figure 4. Le signal vidéo fourni par la barrette P est, après une conversion d'analogique en numérique, appliqué sur l'entrée V1 d'un premier montage selon la figure 4 tandis que le signal vidéo fourni par la barrette P′ est appliqué sur l'entrée V+ du premier montage et sur l'entrée V1 d'un second montage. Les valeurs maximales et les valeurs de déclenchement des circuits de comptage E1, E2, E3 sont programmées dans le premier montage pour que E1 compte de 0 à 2047, E2 de 0 à 2047 quand E1 a atteint la valeur 2047 et E3 de 0 à 1903 quand E2 a atteint le compte 2047 ; ces comptages s'effectuent en synchronisme avec la fourniture de signaux numériques provenant de la barrette P. Les circuits de comptage E1, E2, E3 du second montage selon la figure 4 comptent en synchronisme avec la fourniture des signaux numériques provenant de la barrette P′, il en est de même pour le circuit de comptage E+ du premier montage. Ces circuits E1, E2, E3 du second montage et E+ du premier montage comptent respectivement et à la suite les uns des autres, de 0 à 2047, de 0 à 2047, de 0 à 1873 et de 0 à 29 ; ceci est obtenu par programmation de leurs valeurs maximales et des valeurs de déclenchement de ces circuits et par l'adjonction d'une liaison entre la sortie C31 du circuit de comptage E3 du second montage et l'entrée de commande de comptage C+2 du circuit de comptage E+ du premier montage. Cette façon d'écrire permet d'avoir, dans le premier montage, aux adresses 1874 à 1903, de la mémoire M3a les signaux de la barrette P correspondant à la zone de recouvrement et aux adresses 0 à 29 de la mémoire M+ les signaux de la barrette P' correspondant à la zone de recouvrement. Il est à remarquer que les mémoires M+a et M+b sont choisies de beaucoup plus petites dimensions que les autres mémoires du montage selon la figure 4, du fait que dans l'exemple décrit elles n'ont été conçues que pour servir au stockage relatif à des zones de recouvrement.

Dans le cas de l'utilisation d'une ligne selon la figure 2 les commutateurs G1, G2 et les interrupteurs Y1, Y2 sont dans la position inverse de celle qui est représentée sur la figure 4 et les signaux numériques correspondant aux barrettes b1, b2, b3 de la figure 2 sont respectivement appliqués sur les entrées V1, V2, V3 d'un premier montage selon la figure 4 tandis que les signaux numériques correspondant aux barrettes b1′, b2′, b3′ sont respectivement appliqués sur les entrées V1, V2, V3 d'un second montage ; de plus le signal numérique correspondant à la barrette b3'est appliqué sur l'entrée V+ du premier montage. Les circuits de comptage comptent au rythme de la fourniture des signaux numériques reçus par les mémoires dont ils commandent l'adressage en écriture. Dans le premier montage, les circuits de comptage E1, E2, E3, E+ comptent de 0 à 2047 pour les trois premiers et de 0 à 29 pour le circuit E+ ; dans le second montage les circuits de comptage E1, E2 comptent de 0 à 2047 et le circuit E3 de 0 à 2017 et le circuit de comptage E+ du premier montage commence à compter quand il reçoit sur son entrée de commande de comptage C+2 un signal provenant de la sortie C31 du circuit de comptage E3 du second montage et annonçant que ce circuit E3 a atteint le compte 2017. Ainsi les signaux vidéo correspondant à la zone de recouvrement entre les barrettes B et B′ sont stockés dans le premier montage aux adresses 2018 à 2047 de la mémoire M3a pour la barrette B et aux adresses 0 à 29 de la mémoire M+ pour la barrette B′.

La figure 5 est le schéma simplifié de la partie lecture du dispositif de traitement dont la partie écriture a été décrite à l'aide de la figure 4. Cette figure va permettre de montrer comment, par une lecture appropriée, le traitement de signaux provenant d'assemblages de barrettes monolithiques et qui avait commencé dans la partie écriture peut être achevé dans la partie lecture ; deux exemples d'utilisation seront étudiés qui, bien entendu, correspondront à la suite des opérations décrites ci-avant et qui ont abouti à la mise en mémoire des signaux vidéo provenant de barrettes selon les figures 1 et 2.

L'utilisation en lecture des mémoires M1a, M2a, M3a, M+a de la figure 5 est assurée par un adressage au moyen de circuits de comptage R1, R2, R3, R+ dont les entrées de comptage sont respectivement notées D1, D2, D3, D+ et dont les sorties de signaux d'adressage sont reliées respectivement aux bornes communes de quatre commutateurs à deux positions, K1, K2, K3, K+. Du circuit de comptage R1 vers le circuit de comptage R2 existe une liaison comportant un interrupteur Z1 ; cette liaison est destinée à permettre, lorsque l'interrupteur Z1 est fermé, de ne déclencher le circuit de comptage R2 que lorsque le circuit R1 a atteint une valeur donnée dite valeur de déclenchement. Cinq autres liaisons du même type existent respectivement de R2 vers R1 avec un interrupteur Z1′, de R2 vers R3 avec un interrupteur Z2, de R3 vers R2 avec un interrupteur Z2′, de R3 vers R+ avec un interrupteur Z3 et de R+ vers R3 avec un interrupteur Z3′ ; sur la figure 5, l'entrée du circuit de comptage R3 correspondant à la liaison de R+ vers R3 a été notée Z. De plus, le circuit de comptage R+ comporte une sortie, dite externe, F, destinée également à fournir un signal lorsque le circuit de comptage R+ a atteint une valeur de déclenchement donnée.

Les premières et secondes bornes des commutateurs K1, K2, K3, K+ sont respectivement reliées aux entrées d'adressage lecture des mémoires M1a, M2a, M3a, M+a et M1b, M2b, M3b, M+b ; ces mémoires sont celles qui apparaissaient déjà dans le schéma selon la figure 4. Quatre commutateurs à deux positions Q1, Q2, Q3, Q+, dont les bornes communes sont respectivement reliées aux quatre entrées d'un additionneur S, sont associés aux circuits de mémorisation M1, M2, M3, M+ : leurs premières bornes sont respectivement reliées aux sorties de signaux des mémoires M1a, M2a, M3a, M+a et leurs secondes bornes aux sorties de signaux des mémoires M1b, M2b, M3b, M+b. La sortie de l'additionneur S fournit un signal noté Vs1 à la première borne d'un commutateur à deux positions, W, dont la seconde borne notée X reçoit un signal Vs2 et dont la borne commune fournit un signal Vs. Un circuit d'horloge, non représenté, fournit un signal de commande du commutateur W et des signaux de comptage aux entrées D1, D2, D3, D+ à un rythme propre à ce circuit d'horloge. Pour autoriser cette utilisation en lecture des mémoires M1a, M2a, M3a, M+a, les commutateurs K1, K2, K3, K+, Q1, Q2, Q3, Q+ sont dans la position où ils sont dessinés sur la figure 5 ; et il est à noter que, au même moment, les mémoires M1b, M2b, M3b, M+b étant utilisées en écriture les commutateurs H1, H2, H3, H+ et J1, J2, J3, J+ sont dans la position inverse de celle dans laquelle ils ont été représentés sur la figure 4, c'est-à-dire qu'ils sont en position basse.

Pour la lecture d'une ligne de photo-détecteurs selon la figure 1 ou selon la figure 2, deux montages selon la figure 4 sont utilisés ; il s'agit des deux montages comportant les mémoires dans lesquelles, pendant l'écriture, considérée, l'information fournie par la ligne de photo-détecteurs a été stockée.

Dans le cas d'une ligne de photo-détecteurs selon la figure 1, compte-tenu de la façon dont il a été indiqué, à l'aide de la figure 4, que les informations étaient mises en mémoire, la lecture se fait de la manière décrite ci-après.

Pendant la lecture le traitement consiste à lire les informations contenues dans les mémoires dans un ordre tel que les signaux provenant de cette lecture correspondent aux signaux provenant de la lecture d'une ligne de photo-détecteurs formée d'une seule barrette monolithique ; pour cela il va donc falloir lire à la suite, dans le premier montage, les contenus des mémoires M1a, M2a, M3a, et simultanément, en synchronisme avec les 30 dernières informations contenues aux adresses 1874 à 1903 de la mémoire M3a, les 30 informations contenues depuis l'adresse 29 jusqu'à l'adresse 0 de la mémoire M+a ; cette lecture simultanée se rapporte aux informations de la zone de recouvrement entre les barrettes P et P′ selon la figure 1 ; toujours à la suite, il restera à lire les informations contenues dans le second montage aux adresses 1873 à 0 de la mémoire M3a, puis aux adresses 2047 à 0 de la mémoire M2a, puis aux adresses 2047 à 0 de la mémoire M1a. Pour ce faire, les deux montages sont programmés de la manière suivante. Dans le premier montage les interrupteurs Z1, Z2, Z3, Z1′, Z2′, Z3′ sont dans la position qu'ils occupent sur la figure 5 et les circuits de comptage R1, R2, R3, R+ ont leurs valeurs maximales et leurs valeurs de déclenchement qui sont programmés pour permettre de compter respectivement de 0 à 2047, de 0 à 2047, de 0 à 1903 et de 29 à 0 avec déclenchement du circuit de comptage R2 quand le circuit de comptage R1 a fini de compter, déclenchement du circuit R3 quand le circuit R2 a fini de compter, déclenchement du circuit R+ quand le circuit R3 passe de 1873 à 1874. C'est le circuit R+ du premier montage qui, quand il a fini de compter déclenche la lecture dans le second montage grâce à une liaison établie à cet effet entre la sortie externe F du circuit de comptage R+ et l'entrée Z du circuit R3 du second montage. Dans le second montage les interrupteurs Z1, Z2, Z3, Z3′ sont ouverts, les interrupteurs Z2′, Z1′ sont fermés et les circuits de comptage R3, R2, R1 ont leurs valeurs maximales et leurs valeurs de déclenchement qui sont programmées pour que le circuit de comptage R3 du second montage, déclenché par le circuit de comptage R+ du premier montage, compte de 1873 à 0 puis déclenche le circuit R2 qui compte de 2047 à 0 puis déclenche le circuit R1 qui compte de 2047 à 0 ; quand le circuit de comptage R3 du second montage est déclenché par le passage de 0 à 30 du circuit R+ du premier montage, il compte de 1874 à 0 puis déclenche le circuit R2 et s'arrête ; le circuit R2 compte de 2047 à 0 puis déclenche le circuit R1 et s'arrête ; de même le circuit R1 compte de 2047 à 0 et s'arrête. Les adresses ainsi fournies aux mémoires M1a, M2a, M3a, M+a du premier montage et aux mémoires M3a, M2a, M1a du second montage par les circuits de comptage assurent une lecture de ces mémoires ; les signaux de lecture sont additionnés dans l'additionneur S du premier montage pour fournir un signal Vs1 qui est le signal vidéo traité correspondant à la partie de la ligne de photo-détecteurs qui va du début de cette ligne jusqu'à et y compris la zone de recouvrement. De même le deuxième montage fournit à la sortie de son additionneur S un signal vidéo Vs2 qui est le signal vidéo traité correspondant à la partie de la ligne de photo-détecteurs allant de la zone de recouvrement non comprise jusqu'à la fin de la ligne.

Le traitement final consiste alors, pour obtenir le signal vidéo complet Vs de la ligne de photo-détecteurs, à réunir sur un même conducteur les signaux Vs1 et Vs2 qui sont successifs dans le temps du fait des adressages successifs par lesquels ils ont été obtenus. Pour cela le commutateur W du premier montage est placé dans la position haute qu'il occupe sur la figure 5 dès que le circuit de comptage R1 est déclenché, puis le commutateur W est basculé sur la position basse sous l'action du signal fourni par la sortie externe, F, du circuit de comptage R+, c'est-à-dire sous l'action du signal qui a aussi pour rôle de déclencher la lecture dans le second montage ; quant au commutateur W du second montage il est laissé en permanence en position haute.

Dans le cas de la lecture d'une ligne de photo-détecteurs selon la figure 2 les commutateurs prennent les mêmes positions et les opérations sont sensiblement identiques à la différence près que, en plus de la zone de recouvrement entre les barrettes B et B', il faut tenir compte des zones de recouvrement entre les barrettes b1 et b2, b2 et b3, b3′ et b2′, b2′ et b1′, c'est-à-dire que la programmation des deux montages est réalisée de manière que :
- dans le premier montage le circuit de comptage R1 compte de 0 à 2047 et fournisse ses 30 dernières adresses, 2018 à 2047, en synchronisme avec les 30 premières adresses 0 à 29 du circuit R2
- dans le premier montage, le circuit R2 compte de 0 à 2047 et fournisse ses 30 dernières adresses 2018 à 2047 en synchronisme avec les 30 premières adresses 0 à 29 du circuit R3,
- dans le premier montage, le circuit R3 compte de 0 à 2047 et fournisse ses 30 dernières adresses 2018 à 2047 en synchronisme avec les 30 premières adresses 29 à 0 du circuit R+ qui compte de 29 à 0,
- dans le second montage, le circuit R3, déclenché par la fin du comptage par le circuit R+ du premier montage, compte de 2017 à 0 et fournisse ses 30 dernières adresses 29 à 0 en synchronisme avec les 30 premières adresses 2047 à 2018 du circuit R2,
- dans le second montage le circuit R2 compte de 2047 à 0 et fournisse ses 30 dernières adresses en synchronisme avec les 30 premières adresses 2047 à 2018 du circuit R1 qui, lui, compte de 2047 à 0.

La figure 6 est le schéma électrique à réaliser pour, avec deux dispositifs de traitement 1, 2, obtenir un transformateur vidéo qui puisse effectuer, la lecture d'une ligne de photo-détecteurs selon les figures 1 ou 2. Il s'agit ici des dispositifs de traitement conformes, en écriture, au schéma de la figure 4 et, en lecture, au schéma de la figure 5 ; étant entendu que cette conformité ne tient pas compte de la position des commutateurs et des interrupteurs qui, comme il a été vu varie entre les deux dispositifs et, même, peut varier en cours de fonctionnement.

Dans le cas d'une ligne de photo-détecteurs selon la figure 1 le signal de la barrette P est appliqué sur l'entrée V1 du dispositif 1 et le signal de la barrette P′ est appliqué sur l'entrée V+ du dispositif 1 et sur l'entrée V1 du dispositif 2 ; trois liaisons sont réalisées entre les deux dispositifs ; entre la sortie C31 du second montage et l'entrée C+2 du premier montage, entre la sortie F du premier montage et l'entrée Z du second montage et entre la borne commune du commutateur W du second montage et la borne X du premier montage ; la sortie du transformateur vidéo est constituée par la borne commune du commutateur et du dispositif 1, c'est elle qui délivre le signal vidéo traité Vs.

Dans le cas d'une ligne de photo-détecteurs selon la figure 2, les seules différences concernant la description du paragraphe précédent concernent les signaux appliqués aux entrées vidéo des dispositifs : sur les entrées V1, V2, V3, V+ du dispositif 1 sont respectivement appliqués les signaux vidéo numériques provenant des barrettes b1, b2, b3, b3′ et sur les entrées V1, V2, V3 du dispositif 2 sont respectivement appliqués les signaux vidéo numériques provenant des barrettes b1′, b2′, b3′.

L'invention n'est pas limitée aux exemples décrits ; c'est ainsi que les dispositifs décrits peuvent être utilisés avec d'autres types de lignes de photo-détecteurs que les deux lignes qui ont été étudiées et en particulier avec des lignes ne nécessitant qu'un seul dispositif ou nécessitant plus de deux dispositifs mis en cascade et où le signal de sortie d'un des dispositifs est appliqué à l'entrée X du dispositif suivant.

De même il est possible, sans sortir du cadre de l'invention, de réaliser des dispositifs où tous les circuits de mémorisation ont la même capacité de mémoire, où le nombre des circuits de mémorisation, se réduit à 3 voire 2 ou dépasse 4, où chaque circuit de mémorisation ne comporte qu'une seule mémoire s'il est possible d'écrire dans cette mémoire et de la lire à une vitesse compatible avec le traitement de signal à effectuer. Par ailleurs, au lieu d'utiliser un seul additionneur à travers lequel passent tous les signaux de sortie des circuits de mémorisation il est possible d'utiliser plusieurs additionneurs dont chacun, par exemple, ne reçoit que les signaux de sortie de deux circuits de mémorisation. Il est aussi possible de ne faire passer par le ou les additionneurs que les signaux de sortie des circuits de mémorisation qui se rapportent à des zones de recouvrement, les autres signaux de sortie des circuits de mémorisation étant directement appliqués à un commutateur de sortie tel que W.

Il est à noter de plus que, dans le cas d'une ligne ou d'une portion de ligne de photo-détecteurs composée d'un nombre impair de barrettes monolithiques à traiter dans deux dispositifs de traitement successifs, il est intéressant de traiter des longueurs de ligne identiques dans chaque dispositif, de manière à avoir une même durée d'utilisation des deux dispositifs aussi bien en écriture qu'en lecture ; ainsi, par exemple, avec une ligne composée de cinq barrettes monolithiques il sera intéressant de traiter les signaux provenant de la première, de la deuxième et de la première moitié de la troisième barrette dans le premier dispositif de traitement et les signaux provenant du reste de la ligne dans le second dispositif de traitement.

Et d'une façon générale l'invention s'applique au traitement des signaux provenant de toutes sortes de capteurs optiques qu'ils soient linéaires ou qu'ils soient formés de photo-détecteurs répartis selon une surface ; il suffit que ces capteurs délivrent sur plusieurs sorties des ensembles de signaux distincts les uns des autres et qu'après transposition en numérique, ces signaux doivent être traités pour être fournis de façon ordonnée, sur une sortie commune, à un rythme donné, avec éventuellement des recouvrements nécessitant des additions entre certains des signaux provenant de sorties distinctes du capteur.

## Revendications

1. Dispositif pour le traitement de signaux (1,2), comportant n entrées principales (V1, V2, V3, V+), avec n entier supérieur à 1, pour recevoir des signaux numériques à traiter provenant d'un capteur optique, une sortie principale (Vs) pour délivrer un signal traité dans un format programmable en ligne, et n circuits de mémorisation (M1, M2, M3, M+) ayant des entrées d'écriture et des sorties de lecture, caractérisé en ce qu'il comporte des moyens de commutation (G1, G2, H1, H2, H3, H+) pour assurer le choix entre plusieurs configurations de liaisons entre les entrées principales et les entrées d'écriture, des premiers moyens d'adressage programmables (E1, E2, E3, E+, J1, J2, J3, J+, Y1, Y2) pour assurer le choix entre différents adressages d'écriture des circuits de mémorisation, des seconds moyens d'adressage programmables (R1, R2, R3, R+, Z1, Z2, Z3, Z1′, Z2′, Z3′, K1, K2, K3, K+) pour assurer le choix entre différents adressages de lecture des circuits de mémorisation, au moins un circuit d'addition (S) comportant plusieurs entrées et une sortie et des moyens de liaison (Q1, Q2, Q3, Q+, W) pour rendre possible au moins une configuration de liaisons entre les sorties de lecture, les entrées du circuit d'addition d'une part et entre la sortie du circuit d'addition et la sortie principale d'autre part.

2. Dispositif selon la revendication 1, caractérisé en ce que chaque circuit de mémorisation comporte une première (M1a, M2a, M3a, M+a) et une seconde (M1b, M2b, M3b, M+b) mémoire vive à accès aléatoire et en ce que les premiers et les seconds moyens d'adressage programmables mettent alternativement les premières mémoires en position d'écriture et en position de lecture et simultanément les secondes mémoires en position de lecture et en position d'écriture.

3. Transformateur vidéo caractérisé en ce qu'il comporte au moins un dispositif selon l'une des revendications précédentes.

## Patentansprüche

1. Vorrichtung zum Verarbeiten von Signalen (1,2) mit n Haupteingängen (V1, V2, V3, V+), mit n ganzzahlig und größer als 1, für den Empfang zu verarbeitender digitaler Signale, die von einem optischen Aufnehmer kommen, einem Hauptausgang (Vs) zur Abgabe eines zeilenweise in einem programmierbaren Format verarbeiteten Signals, sowie n Speicherschaltungen M1, M2, M+ mit Schreibeingängen und Leseausgängen, gekennzeichnet durch Umschaltmittel (G1, G2, H1, H2, H3, H+) zur Erzielung der Wahl zwischen mehreren Verbindungskonfigurationen zwischen den Haupteingängen und den Schreibeingängen, erste programmierbare Adressiermittel (E1, E2, E3, E+, J1, J2, J3, J+, Y1, Y2) zur Erzielung der Wahl zwischen verschiedenen Schreibadressierungen der Speicherschaltungen, zweite programmierbare Adressiermittel (R1, R2, R3, R+, Z1, Z2, Z3, Z1′, Z2′, Z3′, K1, K2, K3, K+) zur Erzielung der Wahl zwischen verschiedenen Leseadressierungen der Speicherschaltungen, wenigstens eine Addierschaltung (S) mit mehreren Eingängen und einem Ausgang sowie Verbindungsmittel (Q1, Q2, Q3, Q+, W), um wenigstens eine Verbindungskonfiguration zwischen den Leseausgängen, den Eingängen der Addierschaltung einerseits und zwischen dem Ausgang der Addierschaltung und dem Hauptausgang andererseits zu ermöglichen.

2. Vorrichtung nach Anspruch 1, dadurch gekennzeichnet, daß jede Speicherschaltung einen ersten (M1a, M2a, M3a, M+a) und einen zweiten (M1b, M2b, M3b, M+b) Schreib-Lese-Speicher mit wahlfreiem Zugriff enthält und daß die ersten und zweiten programmierbaren Adressiermittel abwechselnd die ersten Speicher in den Schreibzustand und in den Lesezustand sowie gleichzeitig die zweiten Speicher in den Lesezustand und in den Schreibzustand versetzen.

3. Videotransformator, dadurch gekennzeichnet, daß er wenigstens eine Vorrichtung nach einem der vorhergehenden Ansprüche enthält.

## Claims

1. Device for the processing of signals (1, 2) comprising n main inputs (V1, V2, V3, V+) with n a whole number greater than 1, to receive digital signals to be processed coming from an optical sensor, a main output (Vs) to deliver a processed signal in a format that is programmable on-line, and n memorizing circuits (M1, M2, M3, M+) having writing inputs and reading outputs, characterized in that it includes change-over means (G1, G2, H1, H2, H3, H+) to provide for the choice from among several configurations of links between the main inputs and the writing inputs, first programmable addressing means (E1, E2, E3, E+, J1, J2, J3, J+, Y1, Y2) to provide for the choice from among different addressing operations for writing in the memorization circuits, second programmable addressing means (R1, R2, R3, R+, Z1, Z2, Z3, Z1′, Z2′, Z3′, K1, K2, K3, K+) to provide for the choice from among different addressing operations for the reading of the memorization circuits, at least one addition circuit (S) comprising several inputs and one output and linking means (Q1, Q2, Q3, Q+, W) to enable at least one configuration of links between the reading outputs and the inputs of the addition circuit, on the one hand, and between the output of the addition circuit and the main output, on the other hand.

2. Device according to Claim 1, characterized in that each memorization circuit comprises a first random-access memory (M1a, M2a, M3a, M+a) and a second random-access memory (M1G, M2G, M3G, M+b) and in that the first and the second programmable addressing means alternately place the first memories in writing position and in reading position and, simultaneously, the second memories in reading position and in writing position.

3. Video converter characterized in that it includes at least one device according to one of the preceding claims.
